# EUROPEAN PATENT SPECIFICATION

(11) **EP 3 524 032 B1**
(45) Date of publication and mention of the grant of the patent: **14.06.2023**
(21) Application number: 16778821.5
(22) Date of filing: 10.10.2016
(51) Int. Cl.: H04W 48/16, H04W 48/12, H04W 76/28

(54) **METHOD AND APPARATUS FOR CELL DETECTION IN UNLICENSED COMMUNICATION SYSTEMS**
VERFAHREN UND VORRICHTUNG ZUR ZELLDETEKTION IN UNLIZENZIERTEN KOMMUNIKATIONSSYSTEMEN
PROCÉDÉ ET APPAREIL DE DÉTECTION DE CELLULE DANS DES SYSTÈMES DE COMMUNICATION SANS LICENCE

(43) Date of publication of application: 14.08.2019
(73) Proprietor: Nokia Solutions and Networks Oy, 02610 Espoo (FI)
(72) Inventor: DALSGAARD, Lars, 90230 Oulu (FI); LUNDEN, Jari Petteri, 02230 Espoo (FI); VIRTEJ, Elena, 02100 Espoo (FI); NURMINEN, Riikka Karoliina, 00720 Helsinki (FI)
(74) Representative: Nokia EPO representatives
(86) International application number: PCT/EP2016/074168
(87) International publication number: WO 2018/068808

(56) References cited:
- EP-A2- 2 426 833
- US-A1- 2015 282 080
- US-A1- 2016 100 404
- US-A1- 2016 262 100
- US-B2- 8 837 313

## Description

This disclosure relates to a method and apparatus, and in particular but not exclusively to a method and apparatus for providing controlling measurement delays and cell detection in unlicensed communication systems.

A communication system can be seen as a facility that enables communication between two or more devices such as user terminals, machine-like terminals, base stations and/or other nodes by providing carriers between the communication devices. A communication system can be provided for example by means of a communication network and one or more compatible communication devices. The communication may comprise, for example, communication of data for carrying communications such as voice, electronic mail (email), text message, multimedia and/or content data and so on. Non-limiting examples of services provided include two-way or multi-way calls, data communication or multimedia services and access to a data network system, such as the Internet.

In a wireless system at least a part of communications between at least two stations occurs over wireless interfaces. Examples of wireless systems include public land mobile networks (PLMN), satellite based communication systems and different wireless local networks, for example wireless local area networks (WLAN). A local area wireless networking technology allowing devices to connect to a data network is known by the tradename Wi-Fi (or WiFi). Wi-Fi is often used synonymously with WLAN.

The wireless systems can be divided into cells, and are therefore often referred to as cellular systems. A user can access a communication system by means of an appropriate communication device or terminal. A communication device of a user is often referred to as user equipment (UE). A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

A communication system and associated devices typically operate in accordance with a given standard or specification which sets out what the various entities associated with the system are permitted to do and how that should be achieved. Communication protocols and/or parameters which shall be used for the connection are also typically defined. An example of standardized communication system architectures is the long-term evolution (LTE) of the Universal Mobile Telecommunications System (UMTS) radio-access technology. The LTE is being standardized by the 3rd Generation Partnership Project (3GPP). The LTE employs the Evolved Universal Terrestrial Radio Access Network (E-UTRAN) access. Further development of LTE are sometimes referred to as LTE Advanced (LTE-A). The various development stages of 3GPP specifications are referred to as releases. In this description 3GPP release versions are distinguished by acronym "Rel-nn".

In addition to LTE evolution, 3GPP has initiated a study item targeting a new radio generation (5G) called new radio (NR). NR does not require backwards compatibility with LTE. Instead, it aims at tight interworking between the RAT (radio access technology) and LTE. An objective of a NR study item is to identify and develop technology components needed for new radio (NR) systems to use any spectrum band ranging at least up to 100 GHz. The aim may be to achieve a single technical framework addressing usage scenarios, requirements and deployment scenarios defined in for example TR 38.913. The new radio access technology may be forward compatible to allow specification in two separate phases (Phase I and Phase II).

Rel-13 LTE LAA (Licensed Assisted Access) specifications are aimed to provide definitions for licensed-assisted access to unlicensed radio spectrum. The access is intended to coexist with other technologies and fulfil regulatory requirements. In Rel-13 LAA, unlicensed spectrum is utilized to improve LTE downlink (DL) throughput. Unlicensed band operation may need to be supported also by (5G) new radio.

An example of LAA or enhanced LAA (eLAA) implementations is MulteFire. MulteFire operates 4G LTE technology standalone in licence exempt (unlicensed or shared) spectrum, avoiding the need to acquire and pay for spectrum. Businesses and property owners can buy, install and operate their own MulteFire network in the same way as they do for Wi-Fi. It incorporates LTE functionality supporting voice and data, either independently as a private network and/or interworking with existing mobile networks to provide secure, seamless service through a neutral host. Cellular subscribers from any network can roam and make use of MulteFire networks where commercially and technically supported.

Measurements of the performance in E-UTRAN are based on continuous availability of synchronization and measurement signals (such as the primary synchronisation signal (PSS), secondary synchronisation signal (SSS) and Cell-Specific Reference Signals (CRS)). The user equipment (UE) minimum requirements have been developed based on the assumption of continuous transmission of these signals from the enhanced node B (eNB) entities.

In MulteFire (MF) specifically and LAA/eLAA in general this assumption is no longer valid. Both MF and LAA are based on rules where the eNB has to obey the regulatory rules concerning LBT (Listen Before Talk) and CCA (Clear Channel assessment) which leads to the instances where the eNB is not able to transmit the synchronization and measurement signals in the Discovery Reference Signal (DRS).

The DRS is typically transmitted in the downlink (DL) with a fixed predetermined interval. For example in LAA systems the predetermined interval is the DRS measurement timing configuration (DMTC) and for MF systems the DRS transmission window (DTxW). The interval may, for example, be 160ms.

Within the DRS the eNB transmits signals necessary for cell detection (PSS/SSS/CRS (and two additional signals in MF)). These signals are transmitted with a fixed power level. Furthermore the eNB may also transmit DRS outside the predetermined interval (DMTC/DTxW) if the eNB is transmitting anyway during the time when DRS is repeated. The power level of these additional DRS signals is not guaranteed.

In order to achieve power savings the UE may furthermore be configured to operate with a discontinuous reception (DRX) mode. This allows UE to turn off its receiver once the UE is no longer actively scheduled. The UE is then required to wake up at pre-determined intervals in order to check whether there are any allocations for the UE. If there are allocations, the UE stays awake - otherwise the UE may power off again until next on-duration.

The current LTE approach (which is to be implemented within MF) is that UE is only required to perform measurements aligned with the UE DL monitoring requirements (DRX rules) in order to enable efficient UE power savings.

A problem thus may exist in the ability of the UE to perform measurements because of the combined effect of DRX mode operation and the possible loss of DRS due to LBT. For example if the UE DRX is 640ms and the UE misses DRS during two consecutive DMTC/DTxW periods there may be a gap in cell detection and measurement of 1920ms.

Missing measurements by missing the DRS further causes loss of measurement opportunity on the UE side, which affects the UE measurement performance, accuracy and latency. Decreased measurement performance and increased measurement latency may affect UE and system performance. For example the system may be significantly degraded because of delays in UE reporting or by postponing potential handovers (HO). A delay in the execution of handovers can, in the worst case scenario, lead to UE loss of service.

Document US2016100404A1 discloses periodic candidate windows for opportunistic transmission of one or more reference signals over a carrier in the unlicensed spectrum. Each window is a DMTC occasion, wherein the DMTC windows are separated by a time interval. Each DMTC window consists of several subframes and the DRS is transmitted in a subframe that is free, after performing carrier sensing, e.g. LBT. The UE expects to receive the reference signals in the DMTC windows. If the UE misses a reference signal, it will simply perform detection operations on the subsequent subframes until the expected reference signals are recovered.

The invention is set out in the appended set of claims.

Some embodiments will now be described in further detail, by way of example only, with reference to the following examples and accompanying drawings, in which:
Figure 1 shows a schematic example of a system where the invention may be implemented;
Figure 2 shows an example of a communication device;
Figure 3 shows example timing of measurement signal transmission and reception according to some embodiments;
Figure 4 shows a flow diagram showing an example implementation according to some embodiments;
Figures 5a to 5c show graphs of simulated average successful measurement interval times for conventional and example implementations according to some embodiments;
Figures 6a to 6c show tables of simulated average measurement interval times for conventional and example implementations according to some embodiments.

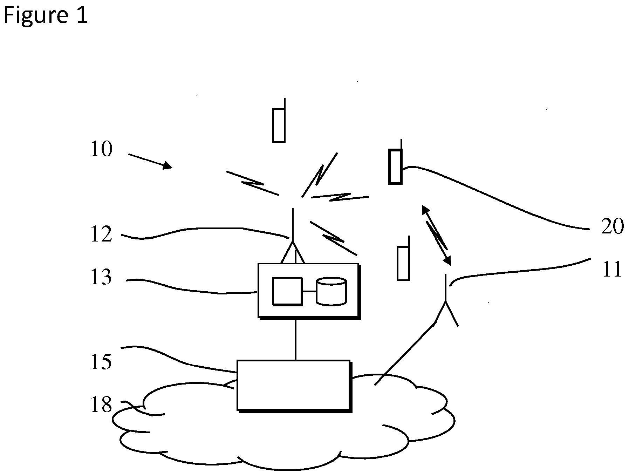

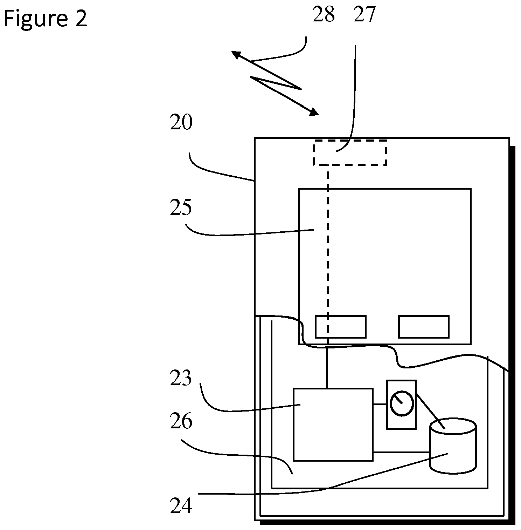

In the following certain exemplifying embodiments are explained with reference to a wireless communication system serving devices adapted for wireless communication. Therefore, before explaining in detail the exemplifying embodiments, certain general principles of a wireless system, components thereof, and devices for wireless communication are briefly explained with reference to system 10 of Figure 1, device 20 of Figure 2 and control apparatus thereof, to assist in understanding the described examples.

A communication device can be used for accessing various services and/or applications provided via a communication system. In wireless communication systems the access is provided via a wireless access interface between wireless communication devices and an appropriate access system. A device may access wirelessly a communication system via a base station. A base station site can provide one or more cells of a cellular system. In the Figure 1 example, a base station 12 can provide e.g. three cells on different carriers. In addition to the base station 12, at least one serving cell can also be provided by means of another station or stations. For example, at least one of the carriers may be provided by a station that is not co-located at base station 12. This possibility is denoted by station 11 in Figure 1. Interaction between the different stations and/or controllers thereof can be arranged in various manners. Each communication device 20 and base station may have one or more radio channels open at the same time and may receive signals from more than one source.

A base station may have a control apparatus 13 and/or may be connected to a controller which has the control apparatus. In the latter case, the controller may serve a plurality of base stations.

A base station node can be connected to a data network 18 via an appropriate gateway 15. A gateway function between the access system and another network such as a packet data network may be provided by means of any appropriate gateway node, for example a packet data gateway and/or an access gateway. A communication system may thus be provided by one or more interconnect networks and the elements thereof, and one or more gateway nodes may be provided for interconnecting various networks.

A communication device can access a communication system based on various access techniques, for example those based on the third Generation Partnership Project (3GPP) specifications. A non-limiting example of mobile architectures is known as the Evolved Universal Terrestrial Radio Access Network (E-UTRAN). A non-limiting example of base station of a cellular system is what is termed as a NodeB or enhanced NodeB (eNB) in the vocabulary of the 3GPP specifications. The eNBs may provide E-UTRAN features such as user plane Radio Link Control/Medium Access Control/Physical Layer Protocol (RLC/MAC/PHY) and control plane Radio Resource Control (RRC) protocol terminations towards mobile communication devices.

Figure 2 shows a schematic, partially sectioned view of a communication device 20 that a user can use for communications. Such a communication device is often referred to as user equipment (UE) or terminal. An appropriate communication device may be provided by any device capable of sending and receiving radio signals. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia, positioning data, other data, and so on. Users may thus be offered and provided numerous services via their communication devices. Non-limiting examples of these services include two-way or multi-way calls, data communication or multimedia services or simply an access to a data communications network system, such as the Internet.

A communication device is typically provided with at least one data processing entity 23, at least one memory 24 and optionally other possible components for use in software and hardware aided execution of tasks it is designed to perform, including control of access to and communications via base stations and/or other user terminals. The data processing, storage and other relevant control apparatus can be provided on an appropriate circuit board and/or in chipsets and/or in one or more integrated circuits. This apparatus is denoted by reference 26.

Various functions and operations of a communications device are arranged into layers in accordance with a hierarchical model. In the model lower layers report to higher layers and receive instructions therefrom.

A user may control the operation of the device 20 by means of a suitable user interface such as key pad, voice commands, touch sensitive screen or pad, combinations thereof or the like. A display 25, a speaker and a microphone are also typically provided. Furthermore, a mobile communication device may comprise appropriate connectors (either wired or wireless) to other devices and/or for connecting external accessories, for example hands-free equipment, thereto.

The device 20 may receive and transmit signals 28 via appropriate apparatus for receiving and transmitting signals. In Figure 2 transceiver apparatus is designated schematically by block 27. The transceiver apparatus may be provided with cognitive radio capability. The transceiver may be provided for example by means of a radio part and associated antenna arrangement. The antenna arrangement may be arranged internally or externally to the mobile device. A wireless communication device can be provided with a Multiple Input / Multiple Output (MIMO) antenna system.

3GPP has defined the concepts of user equipment (UE) specific primary cells (PCell) and secondary cells (SCells). In applications such as carrier aggregation at least but typically only one of the serving cells is denoted primary cell (PCell) whereas the other serving cells are secondary cells (SCells). In the context of LAA, one or more LAA DL secondary cells (SCells) may be configured to a user equipment (UE) as a part of DL carrier aggregation (CA) configuration, while the primary cell (PCell) needs to be on the licensed spectrum. It is expected that Rel-13 LTE LAA will also evolve to support also LAA uplink (UL) transmissions on unlicensed spectrum in later releases, for example in LTE Rel-14.

Listen-Before-Talk (LBT) type protocols are used for opportunistic allocation of resources. Listen-Before-Talk is a contention-based protocol used in wireless communication by allowing several devices to share the same spectrum or channel. If a base station or device wants to transmit information, the base station or device will have to first check that the channel is not already in use.

As discussed previously the implementation of LBT type protocols in eNBs transmitting measurement or reference signals may lead to UE not receiving reference signals and thus miss opportunities for measuring and discovering cell information. The loss of measurement opportunity on the UE side, may affect the UE measurement performance, accuracy and latency. This decreased measurement performance and increased measurement latency may affect UE and system performance and may in a worst case situation lead to UE loss of service.

The concept as discussed in the embodiments which follow is one where the UE attempts to make additional or further measurements when it determines that a measurement opportunity is missed, for example due to LBT protocol causing the eNB to not transmit a known power reference signal.

In the following embodiments the inventive concept is described primarily from the point-of-view of a UE operating within a MulteFire (MF) communications environment. However the inventive concept is not limited to MF communications system and may be applied to other systems in which the (down-link) DL measurement and synchronization signals are not guaranteed to be received in a robust manner. For example this concept may be applied to other Licensed Assisted Access (LAA) systems.

In a first set of embodiments it is assumed that the UE can only use the Discovery Reference Signal (DRS) or reference signal transmitted during the DRS Measurement Timing Configuration (DMTC) period as it is only in this period that the transmission power level of the DRS can be guaranteed. In other words the reference signal is expected to be transmitted at a determined power level with instances of the reference signal separated by a first interval, which may be the DRS Measurement Timing Configuration (DMTC for LAA) or DRS Transmission Window (DTxW for MF) interval. Furthermore in the following embodiments it is assumed that a UE is operating in a discontinuous reception mode (DRX) in which the UE selectively controls the receiver to attempt to receive the reference signal for cell discovery and/or cell signal measurement. The receiver is controlled with on-durations to be able to receive (and in some embodiments the reference signal) with a second interval (the DRX on-duration interval) between on-duration instances. When the UE is operated in a non-DRX mode the UE may continuously perform intra-frequency measurements.

The concept as discussed herein is one where if the UE experiences or determines that it cannot receive the reference signal (DRS) during the DTxW period (and during its reference signal measurement time and On-duration) the UE shall try to receive further additional reference signal (DRS) instances beyond the UE On-Duration. In other words having determined at the receiver at least one missing reference signal instance during an on-duration then controlling the receiver with at least one further on-duration to be able to receive at least one further reference signal instance. In an example embodiment, if the UE experiences that it cannot receive the DRS during the DTxW period (during its On-duration) - e.g. the DRS during the DTxW is not received due to eNB LBT - the UE shall try to receive further additional DRS signals. The additional further DL DRS transmission receptions on the UE side will depend on the number of missed DRS occurrences during the DTxW(s).

The term On Duration should be understood in a generic manner as the details of how DRX or other power saving mechanism works varies from system to system. In an example embodiment, on-duration means the time the UE is required or known to be receiving and/or measuring. In another example, on-duration means the time the UE is required or known to be receiving and/or measuring the serving cell. As one concrete example, in LTE, the DRX Cycle is such that there is a periodic repetition of the On Duration followed by a possible period of inactivity. A related concept is the Active Time i.e. time related to DRX operation during which the UE monitors the PDCCH (Physical Downlink Control Channel). Besides On Duration, the Active Time includes e.g. the time when UE's DRX-Inactivity Timer is running. The DRX-Inactivity Timer runs for a number of consecutive subframes after PDCCH indicates initial user data transmission for the UE. The network knows that the UE has the receiver powered on during the Active Time, as the specified rules work in such way that (expect in error cases) both the network and the UE have the same understanding of UE's Active Time. UE may be receiving or measuring also outside the Active Time, but this cannot be expected by the network. Thus if there is a need for additional time when the UE should be receiving and/or measuring, additional rule(s) to control UE's reception may need to be introduced. In the context of this invention, the "on duration" may be seen to mean also the concept of Active Time in general, not just DRX On Duration as specified e.g. for LTE. For example due to eNB LBT congestion issue means that a reference signal instance during a DTxW is not transmitted (and therefore the UE does not receive the reference signal during the DTxW). In the embodiments as described herein a MulteFire capable UE, operating in an MF communications system and with DRX configured, may be configured to determine that it cannot receive the reference signal (DRS) during the DTxW period and during its scheduled On-duration. The UE in some embodiments can control the receiver to be able to receive at least one further reference signal (DRS) instance at a further reference signal measurement time. Thus the UE may control the receiver so that it will try to receive further additional DRS signals beyond the UE On-Duration. In such a manner the UE may be configured to control the receiver with at least one further on-duration at an integer of the first interval (the DTxW/DTMC interval) from the determined missing reference signal instance so to attempt to receive a further instance of the reference signal transmitted at the known or determined power level. In such a manner the UE is configured to attempt to receive sufficient reference signal instances in order to allow measurements to be made and thus network service levels to be maintained.

In some embodiments the further or additional further down-link (DL) reference signal (DRS) instances or transmission receptions on the UE side depends on the number of missed DRS instances or occurrences during the On-duration DTxW(s). This number (M) may be counted in that missing more than one DRS instance or occurrence causes the UE to control the receiver with the number (M) of on-durations, such that a number (M) of further or additional reference signal instances or are received to allow for the missing instances or occurrences.

Determining a missing reference signal instance at UE may mean for example that the UE attempts to detect and/or measure the reference signal at a configured timing (e.g. a window), but does not detect the transmission of the reference signal. Alternatively it may mean that the quality of the received reference signal is below a threshold. The threshold could be such that the signal quality is indistinguishable from noise, or close to that level, or also higher threshold could be used so that the UE attempts to measure more often if the quality is low. The event of missing a reference signal instance may mean that the UE does not detect the reference signal in any of the subframes of the reference signal transmission window, or in some cases in the part of the reference signal transmission window that overlaps with the UE's On Duration (or Active Time).

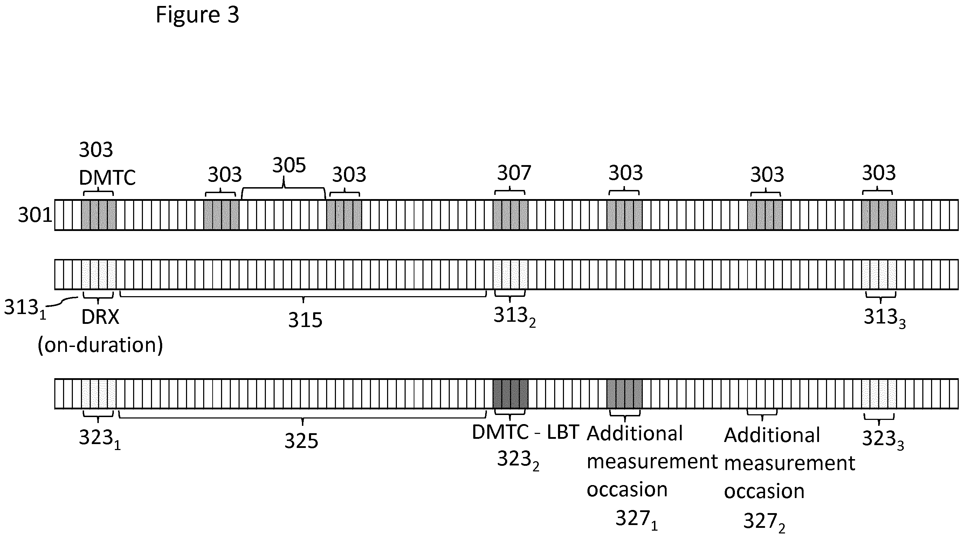

An example of which may be seen in Figure 3 which shows the operation of a eNB 301, a conventional UE 311 and a UE 321 operating according to embodiments as described herein.

The eNB 301 is shown transmitting the DRS occurrences or instances 303 with the first interval (defined by the DTxW interval) 305.

A conventional UE is configured with on-durations 313 which are separated by a second interval (the DRX interval) 315. Providing the UE is able to receive the reference signal within the on-duration 313 then the UE is able to generate measurement results and/or discover cell information within a reasonable time. Where, for example, the eNB is unable to transmit the DRS instance 307 the UE 311 although configured with an on-duration 313₂ does not receive the DRS instance and thus the time between receiving reference signals is defined by the interval between on-duration 313, and 313s. Thus the UE is not able to make service decisions based on current or fresh measurement information for the later part of the period. Furthermore where there are further missing reference signals then the measurement data may be ever more out of date for making service decisions.

A UE 321 operating according to embodiments as described herein however is configured with on-durations 323 which are separated by the second interval (the DRX interval) 325. In the same manner as described with respect to the conventional UE the on-duration occurrences or instances are configured such that they enable the UE to receive the reference signal during the DTxW instances. Thus for example the DTxW instance 323, enables a DRS instance to be received and DRS measurements to be made and third instance 323₃ enables a further DRS instance to be received and further DRS measurements to be made. However the difference between the conventional UE and the UE operating according to the embodiments described herein is shown by the DTxW instance 323₂ which coincides with the DTxW instance 313₂ and which is the example missing DRS instance. In the embodiments described herein if the UE 321 misses the DRS instance during 1 DTxW 323₂ during the On-Duration the UE attempts to try to receive additional DRS occurrences or instances during at least one other DTxW beyond the On-duration. This is shown in Figure 3 by the DTxW instances 327₁ and 327₂ which occur at integer DTxW intervals from the missing reference signal instance. In some embodiments once the UE 321 has successfully received an additional DRS the UE is allowed to revert to DRX only based on DRS measurements.

In some additional or alternative exemplary embodiments, it is proposed to define known power levels for DRS transmissions when the DRS is transmitted outside the DTxW. This can be done in multiple ways: e.g. it could be a network implementation option, with added signalling support, to inform the UE that the DRS is always transmitted with same power level (as used for DRS during the DTxW). Alternative is using offset and signal the power level offset to the UE (in case power level for DRS out DTxW is not the same as for DRS within DTxW).

In some embodiments the UE may be configured to maintain a count of the number of missing reference signal instances. This count may be limited to the number of instances missing within a single DRX interval or in total. In otherwords the operation of determining at the receiver the at least one missing reference signal instance during the on-duration may comprises determining a number (M) of missing reference signal instances.

Having determined the number of missing reference signal instances the receiver may be controlled such that the number (M) of on-durations are enabled at integers of the first interval (DTxW) from the determined missing reference signal instance. In such a manner the number (M) of reference signal instances which match the number (M) of missing signal instances are received. Thus for example when the DRS is missed during two DTxW occasions the UE will try to receive two additional DRS during subsequent DTxW instances. In such a manner the UE can flexibly extend its DL DRS reception based on the number missed DRS occasions during on-durations.

Such an approach enables robust measurements for communications systems such as MF and LAA in general until a certain limit of missed instances is reached. This limit is the number of missed DRS occasions being higher than the number of DRS repetitions within a DRX period.

Although the examples shown herein describe the control of the receiver with respect to configuring further on-durations to receive DRS instances to 'replace' the missing DRS instances it is understood that in some embodiments the additional or further UE on-durations are extensions for the purpose of receiving additional DRS instances.

In some embodiments where there are additional reference signal (DRS) instances transmitted at times other than the DTxW (or DMTC) instances the UE may be configured to control the receiver to receive these reference signal instances. The reference signal (DRS) instances transmitted at times other than the DTxW (or DMTC) instances however are not transmitted at pre-determined or guaranteed power levels. In such embodiments the system may be configured such that the power levels for DRS transmissions when the DRS is transmitted outside the DTxW can be determined or defined.

This determination or definition of the power levels for DRS instances outside the DTxW can be implemented according to any suitable manner. For example the power level may be defined as a network implementation option, with added signalling support to inform the UE that the DRS is always transmitted with same power level (as used for DRS during the DTxW). In some embodiments an indicator or other signalling is used to inform the UE of a power offset between the power level for DRS instances outside the DTxW and DRS instances within the DTxW.

In such embodiments the reference signal is expected to be transmitted at a power level (which may or not be the power level for the reference signal transmitted at the first intervals). In some embodiments instances of the further expected reference signal may be separated by a third interval. The third interval may be less than the first (DTxW) interval. The UE may be configured to control the receiver with at least one further on-duration to receive at least one instance of the further expected reference signal separated by the third interval so to attempt to receive a further instance of the reference signal.

In another example embodiment, For a UE configured with DRX, trying to measure DRS during on-duration. In case of a DRS miss, UE will try to measure DRS more often than OnDuration, but outside the normal (i.e. configured) onDuration, preferably following the DRS pattern.

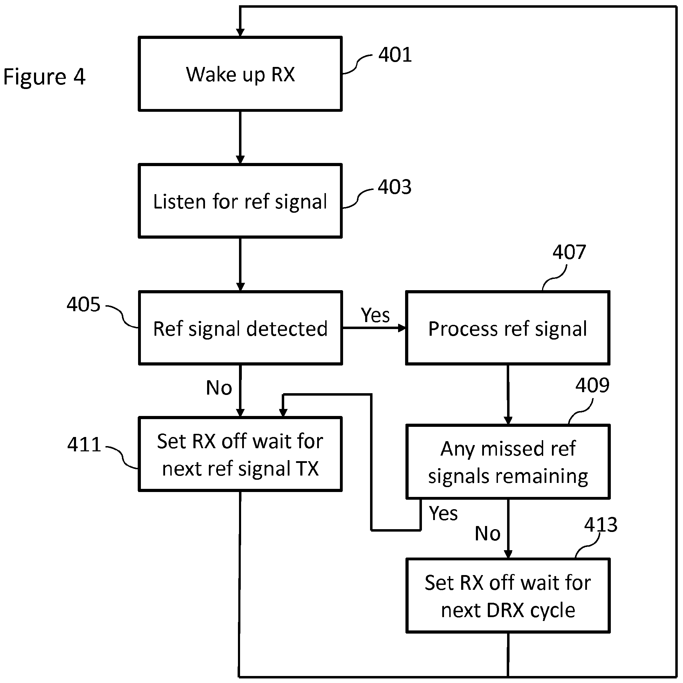

With respect to Figure 4 an example flow diagram of the operations of the user equipment (UE) according to some embodiments is described.

The first operation is one of configuring the receiver to wake up. In other words configuring the receiver with an on-duration.

The operation of waking up the receiver (wake up RX) is shown in Figure 4 by step 401.

The next operation is configuring the receiver to listen for the reference signal (DRS) during the on-duration.

The operation of listening for the reference signal during the on-duration is shown in Figure 4 by step 403.

The next step is determining whether the reference signal has been detected or received.

The operation of determining whether the reference signal has been received is shown in Figure 4 by step 405.

Where the operation of determining whether the reference signal has been detected or received indicates that the reference signal is detected then the reference signal may be processed according to any suitable means or manner. For example the reference signal may be used for cell discovery and/or downlink signal measurement purposes.

The operation of processing the reference signal is shown in Figure 4 by step 407.

Having processed the received reference signal instance the method may further comprise determining whether there are any missed reference signal instances remaining. In other words whether there is still at least one reference signal instance which was missed within the current DRX cycle (or just missed and the number not been completely recovered).

The operation of determining whether there are any missed reference signal instances remaining to be 'caught up' is shown in Figure 4 by step 409.

Where there are no further missing reference signal instances to be caught up then the receiver may controlled so to be switched off, in other words the on-duration ended and the receiver controlled to wait to the start of the next DRX cycle and the method pass back to the first operation in the cycle.

The operation of waiting until the next DRX cycle is shown in Figure 4 by step 413.

Where there are still remaining reference signal instances 'missing' or where the reference signal instance for the current on-duration was not detected then the receiver may be controlled to be switched off, in other words the on-duration ended and the receiver controlled to wait for the next expected reference signal instance transmission and the method pass back to the first operation in the cycle.

The operation of waiting for the next expected reference signal instance is shown in Figure 4 by step 411.

In some embodiments the UE is aware of the DTxW repetition period as well as the UE is configured with connected mode DRX. The UE may be configured to 'wake up' according to on-duration and monitor for potential UE specific allocations while also performing measurements. Where the UE detects a presence of the DRS during the DTxW the UE performs needed actions (detection, measurement etc.) and may follow normal DRX operation (in other words to enter sleep mode if not scheduled). When the UE does not detect presence of the DRS during the DTxW (e.g. one DRS occasion) the UE shall try to receive one additional DRS during one of the following DTxW occasions. In other words during the period where the UE would otherwise be allowed to sleep (in DRX). Once the UE receives one additional DRS (or in some embodiments the number of DRS equal to the lost or missing DRS during on-duration(s)) the UE can revert to DRX aligned measurements.

This behaviour is different from current LAA practice. Currently LAA only specifies SCell measurements, and related performance, and a LAA cell cannot act as stand-alone cell (PCell or PsCell). In current LAA the requirements are blindly scaled according to missed DRS during DMTC. In other words if the DRS instance is missed in one DMTC the measurement requirement is relaxed. Thus as shown below with respect to the standard TR 36.133 rel 14 section 8.11.2.1.1.2 the time allowed for UE is extended with an equal amount of time as the DMTC repetition period:

### 8.11.2.1.1.2 Requirements when DRX is used

When DRX is in use the UE shall be able to identify a new detectable FS3 intra-frequency cell within the cell identification time T_{identify_intra_FS3_DRX}, where the cell identification time of a cell shall include detection of the cell and additionally performing a single measurement with measurement period of T_{measure_intra_FS3_CRS_DRX}, where:.
T_{identify_intra_FS3_DRX} is the intra-frequency period for cell identification as shown in Table 8.11.2.1.1.2-1,
T_{measure_intra_FS3_CRS_DRX} is the intra-frequency period for measurements as shown in Table 8.11.2.1.1.2-2,
T_{DMTC_periodicity} is the discovery signal measurement timing configuration periodicity of higher layer,
L is the number of configured discovery signal occasions during ON DURATION and which are not available during T_{identify_intra_FS3_DRX} for cell identification at the UE due to the absence of the necessary radio signals from the cell,
M is the number of configured discovery signal occasions during ON DURATION and which are not available during T_{measure_intra_FS3_CRS_DRX} for the measurements at the UE due to the absence of the necessary radio signals from the cell.
The requirements in this section apply, provided that L and M are such that: the intra-frequency cell identification period T_{identify_intra_FS3_DRX} does not exceed [72]^{∗}Max{T_{DMTC_periodicity}, DRX cycle length}, and the intra-frequency period T_{measure_intra_FS3_CRS_DRX} for measurements does not exceed [60]^{∗}Max{T_{DMTC_periodicity}, DRX cycle length}.

**Table 8.11.2.1.1.2-1: Intra-frequency cell identification requirements under operation with frame structure 3**

| **SCH Ês/lot** | **CRS measurement bandwidth [RB] _{Note2}** | **CRS Ês/lot** | **T_{identify_intra_FS3_DRX} [ms]** |
|---|---|---|---|
| [0] ≤ SCH Ês/lot | <25 | [-6] ≤ CRS Ês/lot | ([6]+L)*Max{T_{DMTC_periodicity}, DRX cycle length} |
| [-6] ≤ SCH Ês/lot < [0] | <25 | | ([24]+L)*Max{T_{DMTC_periodicity}, DRX cycle length} |
| [0] ≤ SCH Ês/lot | ≥ 25 | [0] ≤ CRS Ês/lot | ([2]+M)*Max{T_{DMTC_periodicity}, DRX cycle length} |
| [-6] ≤ SCH Ês/lot < [0] | ≥ 25 | | ([8]+M)*Max{T_{DMTC_periodicity}, DRX cycle length} |
| NOTE 1: Discovery signal occasion duration (*ds*-*OccasionDuration*) is 1 ms. | | | |
| NOTE 2: The requirements for measurement bandwidth *≥*25 RB are optional. | | | |

A cell shall be considered detectable when the following conditions are met during the discovery signal occasions which are available during T_{identify_intra_FS3_DRX}:
- RSRP related side conditions given in Section 9.1.18.2 are fulfilled for a corresponding Band,
- RSRQ related side conditions given in Section 9.1.18.3 are fulfilled for a corresponding Band,
- SCH_RP is according to Annex B.2.12 for a corresponding Band and SCH Ês/Iot is according to Table 8.11.2.1.1.2-1.
If higher layer filtering is used, an additional cell identification delay can be expected.
In the RRC_CONNECTED state the measurement period for intra-frequency measurements is T_{measure_ intra_FS3_CRS_DRX} as shown in Table 8.11.2.1.1.2-2, when DRX is in use. The UE shall be capable of p performing RSRP and RSRQ measurements for 3 identified intra-frequency cells, and the UE physical layer shall be capable of reporting measurements to higher layers within the measurement period of T_{measure_intra_FS3_CRS_DRX}.

**Table 8.11.2.1.1.2-2: Intra-frequency measurement requirements under operation with frame structure 3**

| **SCH Ês/lot** | **CRS measurement bandwidth [RB] _{Note2}** | **CRS Ês/lot** | **T_{measure_intra_FS3_CRS_DRX} [ms]** |
|---|---|---|---|
| [0] ≤ SCH Ês/lot | <25 | [-6] ≤ CRS Ês/lot | ([5]+M)*Max{T_{DMTC_periodicity}, DRX cycle length} |
| [-6] ≤ SCH Ês/lot < [0] | <25 | | ([20]+M)*Max{T_{DMTC_periodicity}, DRX cycle length} |
| [0] ≤ SCH Ês/lot | ≥ 25 | [0] ≤ CRS Ês/lot | ([1]+M)*Max{T_{DMTC_periodicity}, DRX cycle length} |
| [-6] ≤ SCH Ês/lot < [0] | ≥ 25 | | ([4]+M)*Max{T_{DMTC_periodicity}, DRX cycle length} |
| NOTE 1: Discovery signal occasion duration (*ds-OccasionDuration*) is 1 ms. | | | |
| NOTE 2: The requirements for measurement bandwidth *≥*25 RB are optional. | | | |

The RSRP measurement accuracy for all measured cells shall be as specified in Section 9.1.18.2, and the RSRQ measurement accuracy for all measured cells shall be as specified in Section 9.1.18.3.

The proposed concept may be realized by changing the expected minimum UE requirements e.g. in 36.133. Instead of using blind scaling the scaling would done take into account (and mandate the UE behaviour) that the UE shall use also DMTC periods scheduled in between DRX On-duration periods. In one aspect this approach will only be applied for the case when the LAA cell (or an MF cell) is a primary cell (PCell), secondary cell (SCell), primary secondary cell (PsCell) or a cell used for timing reference. In other words a cell used in its own timing advance group (TAG) without a cell in a licensed band.

One non-limiting example how this could be realized in a specification is as follows using measurement requirements as example (it is understood that the same principle can apply for cell identification):

**Table 8.11.2.1.1.2-2: Intra-frequency measurement requirements under operation with frame structure 3**

| **SCH Ês**/**lot** | **CRS measurement bandwidth [RB] _{Note2}** | **CRS Ês/lot** | **T_{measure_intra_FS3_CRS_DRX} [ms]** |
|---|---|---|---|
| [0] ≤ SCH Ês/lot | <25 | [-6] ≤ CRS Ês/lot | ([5]+M)*Max{T_{DMTC_periodicity}, DRX cycle length} |
| [-6] ≤ SCH Ês/lot < [0] | <25 | | ([20]+M)*Max{T_{DMTC_periodicity}, DRX cycle length} |
| [0] ≤ SCH Ês/lot | ≥ 25 | [0] ≤ CRS Ês/lot | ([1]+M)*Max{T_{DMTC_periodicity}, DRX cycle length} |
| [-6] ≤ SCH Ês/lot < [0] | ≥ 25 | | ([4]+M)*Max{T_{DMTC_periodicity}, DRX cycle length} |
| NOTE 1: Discovery signal occasion duration (*ds-OccasionDuration*) is 1 ms. | | | |
| NOTE 2: The requirements for measurement bandwidth *≥*25 RB are optional. | | | |

If the UE cannot receive discovery signals during a DMTC occasion occurring during ON DURATION, UE shall try to receive DRS during the subsequent DMTC occasions occurring when DRX is in use, until the UE can detect discovery signals.
M is the number of DRX cycles where the UE cannot receive discovery signals in any DMTC occasion.

This example implementation covers the case where the UE misses more than one instance of DRS during the On-duration DMTC. In such a case the value of N may have to be adjusted.

In other words the 'if UE misses DRS in two DRX DMTC occasions, it shall measure two more' can be expanded to cover the situation 'if UE doesn't detect DRS in X consecutive on-duration DMTCoccasions, the UE shall try to detect DRS in the next off-duration DMTCs until it detects DRS'. In such an example then the specification can be changed from

"If the UE cannot receive discovery signals during a DMTC occasion occurring during ON DURATION, UE shall try to receive DRS during the subsequent DMTC occasions occurring when DRX is in use, until the UE can detect discovery signals"
to
"If the UE cannot receive discovery signals during X DMTC occasions occurring during ON DURATION, UE shall try to receive DRS during the subsequent DMTC occasions occurring when DRX is in use, until the UE can detect discovery signals." Where X is any number ≥1.

In some further embodiments the UE can be configured to try and receive further DRS signals for a determined number of DMTC intervals in order to save power. Thus for example the UE having determined a missed reference signal instance the UE may be configured to operate the receiver for Y subsequent DMTC instances only even if the reference signal is not received in those Y subsequent DMTC instances. This may be implemented within a specification by changing the above section to

"If the UE cannot receive discovery signals during X consecutive DMTC occasions occurring during ON DURATION, UE shall try to receive DRS during maximum Y subsequent DMTC occasions occurring when DRX is in use, until the UE can detect discovery signals or until Y is reached", Where X is any number ≥ 1 and Y is any number ≥ 1.

The proposed methods and apparatus may reduce the impact from LBT congestion on the UE measurements and requirements. The more robust measurements on the UE side enables an improvement in the measurement related triggering of actions which may lead to more robust system and mobility. Although there would be an impact on UE power consumption coming from the additional measurements this is believed to be acceptable as there would also be a negative impact from less accurate measurements which may lead to loss of service (RLM - radio link monitoring) which also impacts UE power savings negatively.

Besides RRM (Radio Resource Management) applications, the same approach can be applied to cell detection and radio link monitoring (RLM). In the situation where the UE does not obtain measurement samples during the serving cell DMTC within the DRX on-duration instance, the UE may be configured to performs additional measurement attempts in the following one or more DMTC windows even if they are not within DRX Active Time.

In some embodiments, in the situations where the reference signal (DRS) instances are missed during DMTC, the UE may not only attempt to make additional measurements in the following DMTC (possibly outside the DRX on-duration) instance, but also in any active time. In other words monitoring PDCCH of the serving cell for a given window (for example the DMTC window).

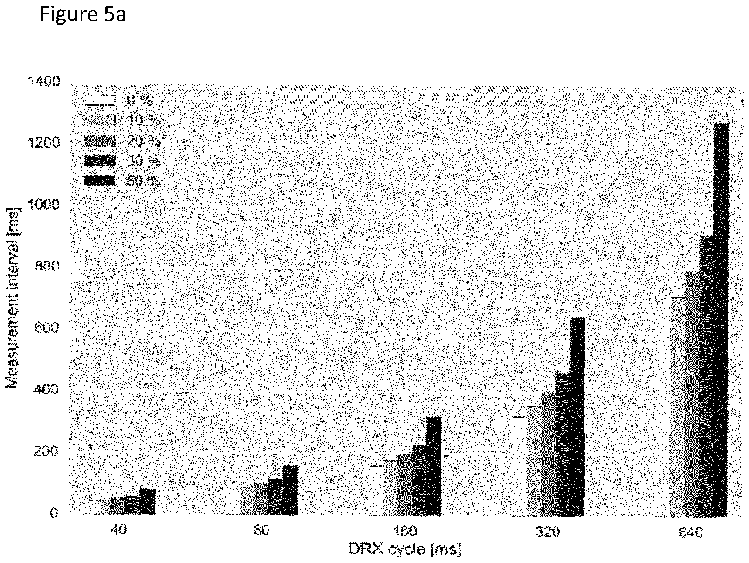

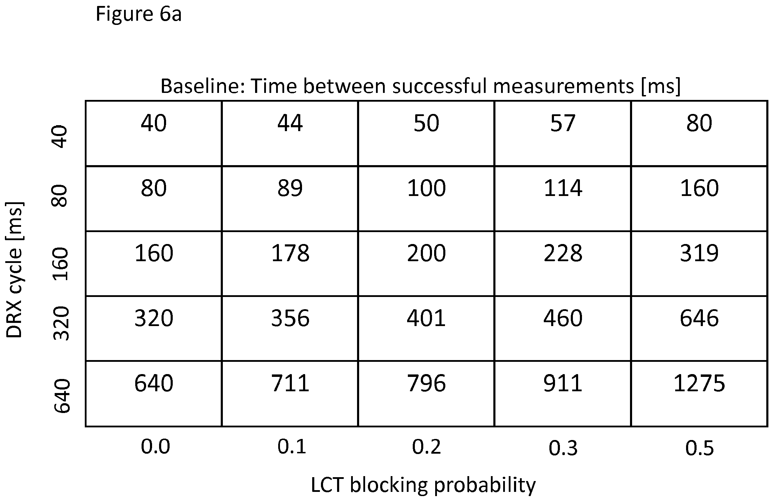

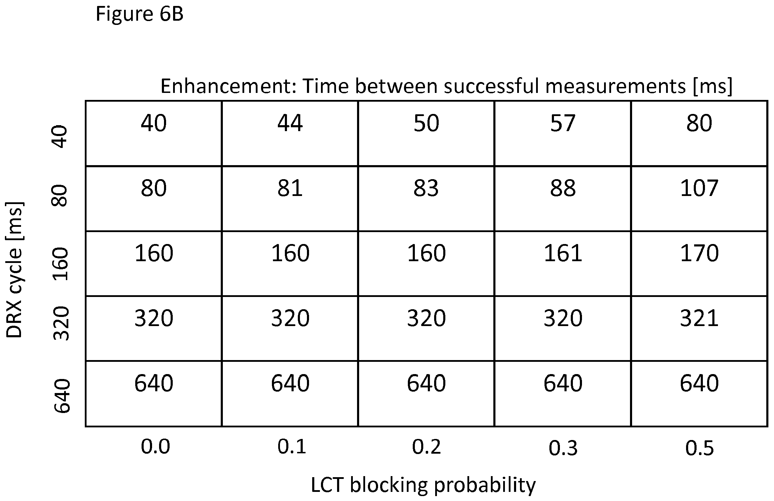

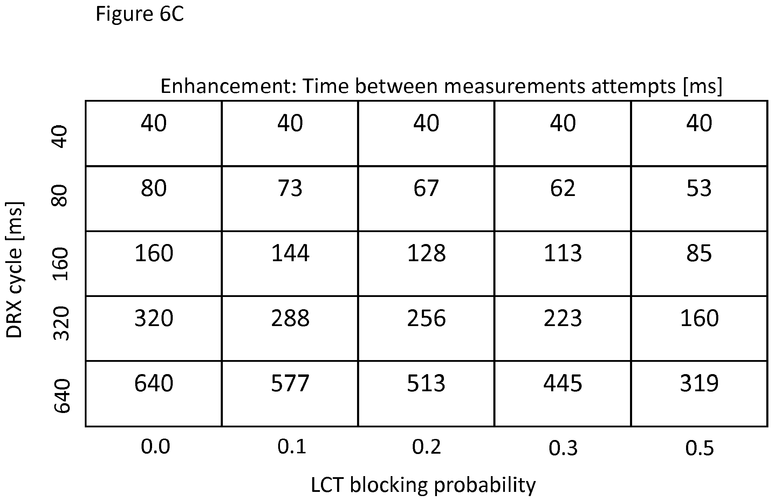

With respect to Figures 5a to 5c and 6a to 6c there are shown the results of simulations highlighting the benefits of implementing the embodiments described here. The Figures show simulated UE measurements with different DRX cycles (40 ... 640 ms) and LBT blocking probabilities (0 ... 0.5). The DMTC periodicity was assumed to be 40 ms.

In the simulation because of LBT, some of the measurement opportunities are missed (where eNB could not transmit the DRS during the DMTC window).

With the disclosed solution, the UE is configured to perform additional measurements during the subsequent DMTC windows until it successfully measures - without waiting for the next DRX cycle.

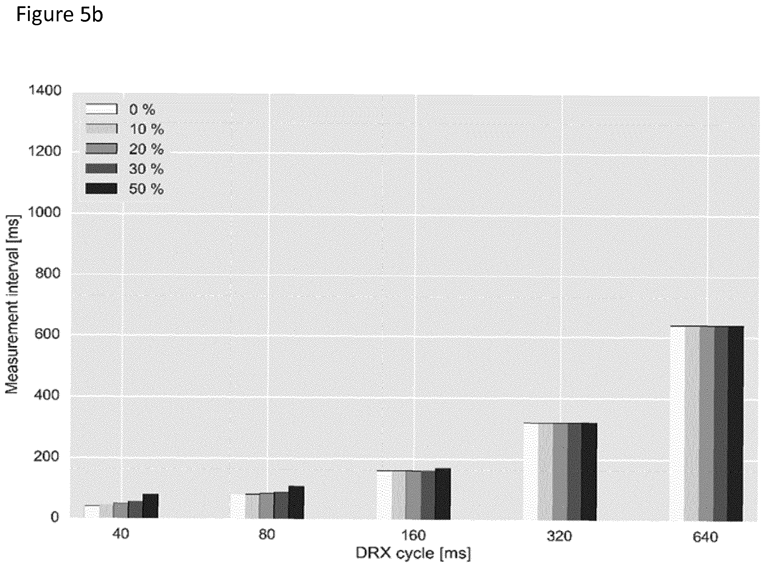

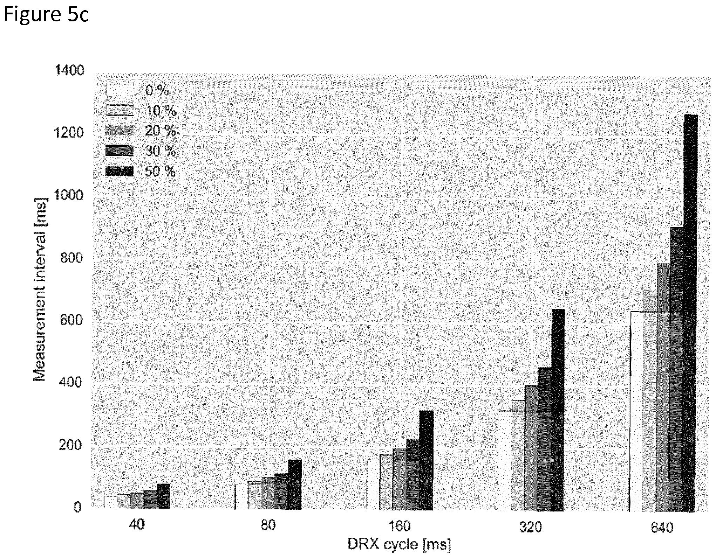

With respect to Figure 5a an example conventional UE is shown where the average time between successful measurements is shown for a range of DRX cycle intervals (40, 80, 160, 320 and 640) and within each a differing probabilities of blocking. As can be seen in Figure 5a as the probability increases the average time between successful measurements increases. This is particularly significant for long DRX cycle intervals. Figure 5b shows the same simulation performed on a UE implementing embodiments as described herein where the average time between successful measurements increases due to the initial 'missing' reference signal instance but the next instance is a small number of DTxW intervals away. Figure 5c shows a comparison of the difference between the conventional and the implemented embodiments and which shows a significant difference for long DRX cycle intervals.

Similarly Figure 6a shows a table of the average time between successful measurements is shown for a range of DRX cycle intervals (40, 80, 160, 320 and 640) and probabilities of blocking (0.0, 0.1, 0.2, 0.3, 0.5) for an example conventional UE, Figure 5b shows the same simulation performed on a UE implementing embodiments as described herein, and Figure 5c shows a difference between the conventional and the implemented embodiments and which shows a significant difference for long DRX cycle intervals.

As the results show, this significantly reduces the time between successful measurements. The drawback is that UE ends up measuring more frequently, but the overall negative impact is not that severe - even with high LBT blocking probability.

The required data processing apparatus and functions may be provided by means of one or more data processors. The described functions may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. Appropriate memory capacity can be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory. One or more of the steps discussed in relation to Figure 4 may be performed by one or more processors in conjunction with one or more memories.

An appropriately adapted computer program code product or products may be used for implementing the embodiments, when loaded or otherwise provided on an appropriate data processing apparatus. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

It is noted that whilst embodiments have been described in relation to certain architectures, similar principles can be applied to other systems. Therefore, although certain embodiments were described above by way of example with reference to certain exemplifying architectures for wireless networks, technologies and standards, embodiments may be applied to any other suitable forms of communication systems than those illustrated and described herein. It is also noted that different combinations of different embodiments are possible.

## Claims

1. A method for communication in an unlicensed wireless communication system comprising:
controlling a receiver at a user equipment to attempt to receive a reference signal for cell discovery and/or cell signal measurement, wherein transmission of the reference signal is subject to a listen-before-talk type protocol and the reference signal is expected to be transmitted at a determined power level within a configured reference signal transmission window in time with instances of the reference signal transmission window separated by a first time interval and the receiver is controlled to be able to receive the reference signal at a reference signal measurement time, with instances of the reference signal measurement time separated by a second time interval;
determining at the receiver at least one missing reference signal instance within a reference signal transmission window during the reference signal measurement time;
controlling the receiver to be able to receive at least one further reference signal instance at a further reference signal measurement time, the separation of the further reference signal measurement time and the reference signal measurement time being less than the second time interval.

2. The method as claimed in claim 1, wherein controlling the receiver to be able to receive at least one further reference signal instance at a further reference signal measurement time comprises controlling the receiver to attempt to receive a further instance of the reference signal transmitted at the determined power level at further instances of the reference signal transmission window within the second time interval.

3. The method as claimed in claim 2, wherein controlling the receiver to attempt to receive a further instance of the reference signal transmitted at the determined power level at further instances of the reference signal transmission window within the second time interval comprises controlling the receiver to attempt to receive a next instance of the reference signal transmitted at the determined power level within a next reference signal transmission window instance.

4. The method as claimed in claim 1, wherein the reference signal is further expected to be transmitted at a further power level within a further reference signal transmission window, with instances of the expected further reference signal transmission window separated by a third time interval, the third time interval being less than the first time interval, and controlling the receiver to be able to receive at least one further reference signal instance at a further reference signal measurement time comprises controlling the receiver to receive at least one instance of the further expected reference signal at an instance of the further reference signal transmission window.

5. The method as claimed in claim 4, wherein controlling the receiver to receive at least one instance of the further expected reference signal comprises controlling the receiver to receive a next instance of the further expected reference signal transmitted at a next instance of the further reference signal transmission window.

6. The method as claimed in any of claims 4 and 5, wherein the further power level is the determined power level.

7. The method as claimed in any of claims 4 and 5, wherein the receiver is configured to receive an indicator comprising information of an offset between the determined power level and the further power level.

8. The method as claimed in any of claims 1 to 7, wherein determining at the receiver at least one missing reference signal instance during the reference signal measurement time comprises determining a number ,M, of missing reference signal instances over more than one reference signal measurement time instances.

9. The method as claimed in claim 8 when dependent on claim 2, wherein controlling the receiver to attempt to receive the further instance of the reference signal transmitted at the determined power level at further instances of reference signal transmission window within the second time interval comprises controlling the receiver to receive the number, M, of instances of the reference signal transmitted at the determined power level, such that the number, M, of reference signal instances are received.

10. The method as claimed in claim 8, when dependent on any of claims 4 to 7, wherein controlling the receiver to attempt to receive the further instance of the reference signal transmitted at the determined power level within the further reference signal transmission window instance within the second time interval comprises controlling the receiver to receive the number , M, of instances of the reference signal within the further reference signal transmission windows, such that the number , M, of reference signal instances are received.

11. The method as claimed in any of claims 1 to 10, wherein controlling the receiver to be able to receive at least one further reference signal instance at a further reference signal measurement time comprises controlling the receiver to be able to receive the at least one further reference signal instance for only a determined number of further reference signal measurement times.

12. The method as claimed in any of claims 1 to 11, wherein the reference signal is a discovery reference signal, the first time interval is a discovery reference signal transmission window interval and the second time interval is discontinuous reception interval.

13. The method as claimed in any of claims 1 to 11, wherein the reference signal is a discovery reference signal, the first time interval is a discovery reference signal measurement timing configuration interval and the second time interval is discontinuous reception interval.

14. A computer program comprising program code means adapted to perform the steps of any one of the preceding claims when the program code is run on a data processing apparatus for a user equipment.

15. An apparatus for a user equipment for communication in an unlicensed wireless communication system, said apparatus comprising at least one processor and at least one memory including computer code for one or more programs, the at least one memory and the computer code configured, with the at least one processor, to cause the apparatus at least to:
control a receiver to attempt to receive a reference signal for cell discovery and/or cell signal measurement, wherein transmission of the reference signal is subject to a listen-before-talk type protocol and the reference signal is expected to be transmitted at a determined power level within a configured reference signal transmission window in time with instances of the reference signal transmission window separated by a first time interval and the receiver is controlled to be able to receive the reference signal at a reference signal measurement time, with instances of the reference signal measurement time separated by a second time interval;
determine at least one missing reference signal instance within the reference signal transmission window based on non-detection of the at least one missing reference signal instance during the reference signal measurement time;
control the receiver to be able to receive at least one further reference signal instance at a further reference signal measurement time, the separation of the further reference signal measurement time and the reference signal measurement time being less than the second time interval;

## Patentansprüche

1. Verfahren zur Kommunikation in einem nicht lizenzierten drahtlosen Kommunikationssystem, das Folgendes umfasst:
Steuern eines Empfängers an einer Teilnehmereinrichtung zum Versuchen, ein Referenzsignal für eine Zellentdeckung und/oder eine Zellsignalmessung zu empfangen, wobei eine Übertragung des Referenzsignals einem Listen-before-Talk-Protokoll unterliegt und erwartet wird, dass das Referenzsignal mit einem bestimmten Leistungsniveau innerhalb eines ausgelegten Referenzsignalübertragungsfensters rechtzeitig übertragen wird, wobei Instanzen des Referenzsignalübertragungsfensters durch ein erstes Zeitintervall getrennt sind und der Empfänger derart gesteuert wird, dass er das Referenzsignal zu einer Referenzsignalmesszeit empfangen kann, wobei Instanzen der Referenzsignalmesszeit durch ein zweites Zeitintervall getrennt sind;
Bestimmen von mindestens einer fehlenden Referenzsignalinstanz im Referenzsignalübertragungsfenster am Empfänger während der Referenzsignalmesszeit;
Steuern des Empfängers derart, dass er zu einer weiteren Referenzsignalmesszeit mindestens eine weitere Referenzsignalinstanz empfangen kann, wobei die Trennung der weiteren Referenzsignalmesszeit und der Referenzsignalmesszeit kleiner ist als das zweite Zeitintervall.

2. Verfahren nach Anspruch 1, wobei das Steuern des Empfängers derart, dass er zu einer weiteren Referenzsignalmesszeit mindestens eine weitere Referenzsignalinstanz empfangen kann, das Steuern des Empfängers zum Versuchen, in weiteren Instanzen des Referenzsignalübertragungsfensters innerhalb des zweiten Zeitintervalls eine weitere Instanz des Referenzsignals zu empfangen, die mit dem bestimmten Leistungsniveau übertragen wird, umfasst.

3. Verfahren nach Anspruch 2, wobei das Steuern des Empfängers zum Versuchen, in weiteren Instanzen des Referenzsignalübertragungsfensters innerhalb des zweiten Zeitintervalls eine weitere Instanz des Referenzsignals zu empfangen, das mit dem bestimmten Leistungsniveau übertragen wird, das Steuern des Empfängers zum Versuchen, innerhalb einer nächsten Referenzsignalübertragungsfensterinstanz eine nächste Instanz des Referenzsignals zu empfangen, das mit dem bestimmten Leistungsniveau übertragen wird, umfasst.

4. Verfahren nach Anspruch 1, wobei ferner erwartet wird, dass das Referenzsignal mit einem weiteren Leistungsniveau innerhalb eines weiteren Referenzsignalübertragungsfensters übertragen wird, wobei Instanzen des erwarteten weiteren Referenzsignalübertragungsfensters durch ein drittes Zeitintervall getrennt sind, wobei das dritte Zeitintervall kleiner ist als das erste Zeitintervall, und das Steuern des Empfängers derart, dass er zu einer weiteren Referenzsignalmesszeit mindestens eine weitere Referenzsignalinstanz empfangen kann, das Steuern des Empfängers zum Empfangen von mindestens einer Instanz des weiteren erwarteten Referenzsignals in einer Instanz des weiteren Referenzsignalübertragungsfensters umfasst.

5. Verfahren nach Anspruch 4, wobei das Steuern des Empfängers zum Empfangen von mindestens einer Instanz des weiteren erwarteten Referenzsignals das Steuern des Empfängers zum Empfangen einer nächsten Instanz des weiteren erwarteten Referenzsignals, das in einer nächsten Instanz des weiteren Referenzsignalübertragungsfensters übertragen wird, umfasst.

6. Verfahren nach einem der Ansprüche 4 und 5, wobei das weitere Leistungsniveau das bestimmte Leistungsniveau ist.

7. Verfahren nach einem der Ansprüche 4 und 5, wobei der Empfänger dazu ausgelegt ist, einen Indikator zu empfangen, der Informationen zu einem Versatz zwischen dem bestimmten Leistungsniveau und dem weiteren Leistungsniveau umfasst.

8. Verfahren nach einem der Ansprüche 1 bis 7, wobei das Bestimmen von mindestens einer fehlenden Referenzsignalinstanz am Empfänger während der Referenzsignalmesszeit das Bestimmen einer Anzahl, M, von fehlenden Referenzsignalinstanzen über mehr als eine Referenzsignalmesszeitinstanz umfasst.

9. Verfahren nach Anspruch 8, sofern von Anspruch 2 abhängig, wobei das Steuern des Empfängers zum Versuchen, in weiteren Instanzen des Referenzsignalübertragungsfensters innerhalb des zweiten Zeitintervalls die weitere Instanz des Referenzsignals zu empfangen, das mit dem bestimmten Leistungsniveau übertragen wird, das Steuern des Empfängers zum Empfangen der Anzahl, M, von Instanzen des Referenzsignals, das mit dem bestimmten Leistungsniveau übertragen wird, umfasst, derart, dass die Anzahl, M, von Referenzsignalinstanzen empfangen werden.

10. Verfahren nach Anspruch 8, sofern von einem der Ansprüche 4 bis 7 abhängig, wobei das Steuern des Empfängers zum Versuchen, innerhalb der weiteren Referenzsignalübertragungsfensterinstanz innerhalb des zweiten Zeitintervalls die weitere Instanz des Referenzsignals zu empfangen, das mit dem bestimmten Leistungsniveau übertragen wird, das Steuern des Empfängers zum Empfangen der Anzahl, M, von Instanzen des Referenzsignals innerhalb der weiteren Referenzsignalübertragungsfenster umfasst, derart, dass die Anzahl, M, von Referenzsignalinstanzen empfangen werden.

11. Verfahren nach einem der Ansprüche 1 bis 10, wobei das Steuern des Empfängers derart, dass er zu einer weiteren Referenzsignalmesszeit mindestens eine weitere Referenzsignalinstanz empfangen kann, das Steuern des Empfängers derart, dass er die mindestens eine weitere Referenzsignalinstanz nur für eine bestimmte Anzahl von weiteren Referenzsignalmesszeiten empfangen kann, umfasst.

12. Verfahren nach einem der Ansprüche 1 bis 11, wobei das Referenzsignal ein Entdeckungsreferenzsignal ist, das erste Zeitintervall ein Entdeckungsreferenzsignalübertragungsfensterintervall ist und das zweite Zeitintervall ein diskontinuierliches Empfangsintervall ist.

13. Verfahren nach einem der Ansprüche 1 bis 11, wobei das Referenzsignal ein Entdeckungsreferenzsignal ist, das erste Zeitintervall ein Entdeckungsreferenzsignalmesszeitauslegungsintervall ist und das zweite Zeitintervall ein diskontinuierliches Empfangsintervall ist.

14. Computerprogramm, das Programmcodemittel umfasst, die angepasst sind, die Schritte von einem der vorhergehenden Ansprüche durchzuführen, wenn der Programmcode auf einer Datenverarbeitungseinrichtung für eine Teilnehmereinrichtung läuft.

15. Einrichtung für eine Teilnehmereinrichtung zur Kommunikation in einem nicht lizenzierten drahtlosen Kommunikationssystem, wobei die Einrichtung mindestens einen Prozessor und mindestens einen Speicher umfasst, der Computercode für ein oder mehrere Programme beinhaltet, wobei der mindestens eine Speicher und der Computercode dazu ausgelegt sind, mit dem mindestens einen Prozessor zu bewirken, dass die Einrichtung mindestens Folgendes durchführt:
Steuern eines Empfängers zum Versuchen, ein Referenzsignal für eine Zellentdeckung und/oder eine Zellsignalmessung zu empfangen, wobei eine Übertragung des Referenzsignals einem Listen-before-Talk-Protokoll unterliegt und erwartet wird, dass das Referenzsignal mit einem bestimmten Leistungsniveau innerhalb eines ausgelegten Referenzsignalübertragungsfensters rechtzeitig übertragen wird, wobei Instanzen des Referenzsignalübertragungsfensters durch ein erstes Zeitintervall getrennt sind und der Empfänger derart gesteuert wird, dass er das Referenzsignal zu einer Referenzsignalmesszeit empfangen kann, wobei Instanzen der Referenzsignalmesszeit durch ein zweites Zeitintervall getrennt sind;
Bestimmen von mindestens einer fehlenden Referenzsignalinstanz im Referenzsignalübertragungsfenster auf Basis einer Nichtdetektion der mindestens einen fehlenden Referenzsignalinstanz während der Referenzsignalmesszeit;
Steuern des Empfängers derart, dass er zu einer weiteren Referenzsignalmesszeit mindestens eine weitere Referenzsignalinstanz empfangen kann, wobei die Trennung der weiteren Referenzsignalmesszeit und der Referenzsignalmesszeit kleiner ist als das zweite Zeitintervall.

## Revendications

1. Procédé de communication dans un système de communication sans fil sans licence comprenant :
la commande d'un récepteur au niveau d'un équipement utilisateur pour tenter de recevoir un signal de référence pour la découverte de cellules et/ou la mesure de signaux cellulaires, dans lequel la transmission du signal de référence est soumise à un protocole de type "écouter avant de parler", et le signal de référence est censé être transmis à un niveau de puissance déterminé dans une fenêtre de transmission de signal de référence configurée dans le temps, les instances de la fenêtre de transmission de signal de référence étant séparées par un premier intervalle de temps, et le récepteur étant commandé pour être en mesure de recevoir le signal de référence à un temps de mesure de signal de référence, les instances du temps de mesure de signal de référence étant séparées par un deuxième intervalle de temps ;
la détermination, au niveau du récepteur, d'au moins une instance de signal de référence manquante dans une fenêtre de transmission de signal de référence pendant le temps de mesure de signal de référence ;
la commande du récepteur pour qu'il soit en mesure de recevoir au moins une instance de signal de référence supplémentaire à un temps de mesure de signal de référence supplémentaire, l'intervalle séparant le temps de mesure de signal de référence supplémentaire du temps de mesure de signal de référence étant inférieur au deuxième intervalle de temps.

2. Procédé selon la revendication 1, dans lequel la commande du récepteur pour qu'il soit en mesure de recevoir au moins une instance de signal de référence supplémentaire à un temps de mesure de signal de référence supplémentaire comprend la commande du récepteur pour qu'il tente de recevoir une instance supplémentaire du signal de référence transmis au niveau de puissance déterminé, à des instances supplémentaires de la fenêtre de transmission de signal de référence dans le deuxième intervalle de temps.

3. Procédé selon la revendication 2, dans lequel la commande du récepteur pour qu'il tente de recevoir une instance supplémentaire du signal de référence transmis au niveau de puissance déterminé, à des instances supplémentaires de la fenêtre de transmission de signal de référence dans le deuxième intervalle de temps comprend la commande du récepteur pour qu'il tente de recevoir une instance suivante du signal de référence transmis au niveau de puissance déterminé, dans une instance de fenêtre de transmission de signal de référence suivante.

4. Procédé selon la revendication 1, dans lequel le signal de référence est en outre censé être transmis à un niveau de puissance supplémentaire dans une fenêtre de transmission de signal de référence supplémentaire, les instances de la fenêtre de transmission de signal de référence supplémentaire attendue étant séparées par un troisième intervalle de temps, le troisième intervalle de temps étant inférieur au premier intervalle de temps, et la commande du récepteur pour qu'il soit en mesure de recevoir au moins une instance de signal de référence supplémentaire à un temps de mesure de signal de référence supplémentaire comprend la commande du récepteur pour qu'il soit en mesure de recevoir au moins une instance du signal de référence supplémentaire attendu, à une instance de la fenêtre de transmission de signal de référence supplémentaire.

5. Procédé selon la revendication 4, dans lequel la commande du récepteur pour qu'il soit en mesure de recevoir au moins une instance du signal de référence supplémentaire attendu comprend la commande du récepteur pour qu'il soit en mesure de recevoir une instance suivante du signal de référence supplémentaire attendu transmis à une instance suivante de la fenêtre de transmission de signal de référence supplémentaire.

6. Procédé selon l'une des revendications 4 et 5, dans lequel le niveau de puissance supplémentaire est le niveau de puissance déterminé.

7. Procédé selon l'une des revendications 4 et 5, dans lequel le récepteur est configuré pour recevoir un indicateur comprenant des informations d'un décalage entre le niveau de puissance déterminé et le niveau de puissance supplémentaire.

8. Procédé selon l'une des revendications 1 à 7, dans lequel la détermination, au niveau du récepteur, d'au moins une instance de signal de référence manquante pendant le temps de mesure de signal de référence comprend la détermination d'un nombre M d'instances de signal de référence manquantes sur plus d'une instance de temps de mesure de signal de référence.

9. Procédé selon la revendication 8 lorsqu'elle dépend de la revendication 2, dans lequel la commande du récepteur pour qu'il tente de recevoir l'instance supplémentaire du signal de référence transmis au niveau de puissance déterminé à des instances supplémentaires de fenêtre de transmission de signal de référence dans le deuxième intervalle de temps comprend la commande du récepteur pour qu'il reçoive le nombre M d'instances du signal de référence transmis au niveau de puissance déterminé, de sorte que le nombre M d'instances de signal de référence soit reçu.

10. Procédé selon la revendication 8 lorsqu'elle dépend de l'une des revendications 4 à 7, dans lequel la commande du récepteur pour qu'il tente de recevoir l'instance supplémentaire du signal de référence transmis au niveau de puissance déterminé dans l'instance de fenêtre de transmission de signal de référence supplémentaire dans le deuxième intervalle de temps comprend la commande du récepteur pour qu'il reçoive le nombre M d'instances du signal de référence dans les fenêtres de transmission de signal de référence supplémentaires, de sorte que le nombre M d'instances de signal de référence soit reçu.

11. Procédé selon l'une des revendications 1 à 10, dans lequel la commande du récepteur pour qu'il soit en mesure de recevoir au moins une instance de signal de référence supplémentaire à un temps de mesure de signal de référence supplémentaire comprend la commande du récepteur pour qu'il soit en mesure de recevoir l'au moins une instance de signal de référence supplémentaire pendant seulement un nombre déterminé de temps de mesures de signaux de référence supplémentaires.

12. Procédé selon l'une des revendications 1 à 11, dans lequel le signal de référence est un signal de référence de découverte, le premier intervalle de temps est un intervalle de fenêtre de transmission de signal de référence de découverte et le deuxième intervalle de temps est un intervalle de réception discontinue.

13. Procédé selon l'une des revendications 1 à 11, dans lequel le signal de référence est un signal de référence de découverte, le premier intervalle de temps est un intervalle de configuration de moment de mesure de signal de référence de découverte, et le deuxième intervalle de temps est un intervalle de réception discontinue.

14. Programme informatique comprenant des moyens de code de programme adaptés pour réaliser les étapes de l'une quelconque des revendications précédentes lorsque le code de programme est exécuté sur un appareil de traitement de données pour un équipement utilisateur.

15. Appareil pour un équipement utilisateur, de communication dans un système de communication sans fil sans licence, ledit appareil comprenant au moins un processeur et au moins une mémoire comprenant un code informatique pour un ou plusieurs programmes, l'au moins une mémoire et le code informatique étant configurés, avec l'au moins un processeur, pour amener l'appareil au moins :
à commander un récepteur pour tenter de recevoir un signal de référence pour la découverte de cellules et/ou la mesure de signaux cellulaires, dans lequel la transmission du signal de référence est soumise à un protocole de type "écouter avant de parler", et le signal de référence est censé être transmis à un niveau de puissance déterminé dans une fenêtre de transmission de signal de référence configurée dans le temps, les instances de la fenêtre de transmission de signal de référence étant séparées par un premier intervalle de temps, et le récepteur étant commandé pour qu'il soit en mesure de recevoir le signal de référence à un temps de mesure de signal de référence, les instances du temps de mesure de signal de référence étant séparées par un deuxième intervalle de temps ;
à déterminer au moins une instance de signal de référence manquante dans la fenêtre de transmission de signal de référence sur la base de la non-détection de l'au moins une instance de signal de référence manquante pendant le temps de mesure de signal de référence ;
à commander le récepteur pour qu'il soit en mesure de recevoir au moins une instance de signal de référence supplémentaire à un temps de mesure de signal de référence supplémentaire, l'intervalle séparant le temps de mesure de signal de référence supplémentaire du temps de mesure de signal de référence étant inférieur au deuxième intervalle de temps.
